# EUROPÄISCHE PATENTSCHRIFT

(11) **EP 1 333 996 B1**
(45) Veröffentlichungstag und Bekanntmachung des Hinweises auf die Patenterteilung: **29.08.2007**
(21) Anmeldenummer: 01974334.3
(22) Anmeldetag: 10.10.2001
(51) Int. Cl.: B60H 1/34

(54) **LUFTLEITDÜSE**
AIR-CONDUCTION VENT
BUSE DE GUIDAGE D'AIR

(30) Priorität: 01.11.2000 DE 10054555
(43) Veröffentlichungstag der Anmeldung: 13.08.2003
(73) Patentinhaber: Volkswagen AG, 38436 Wolfsburg (DE)
(72) Erfinder: DRILLER, Sönke, 38518 Gifhorn (DE)
(86) Internationale Anmeldenummer: PCT/EP2001/011691
(87) Internationale Veröffentlichungsnummer: WO 2002/036372

(56) Entgegenhaltungen:
- DE-C- 4 207 670
- DE-U- 29 817 513
- FR-A- 2 671 520

## Beschreibung

Die Erfindung betrifft eine Luftleitdüse zur Seitenscheibenentfrostung und Innenraumbelüftung eines Kraftfahrzeuges mit einem Luftaustrittskanal, an dessen Luftaustritt mindestens eine Festlamelle und mehrere um jeweils eine Längsachse simultan verschwenkbare Schwenklamellen im Parallelabstand zueinander angeordnet sind, wobei durch die mindestens eine Festlamelle ein Ausströmbereich definiert ist, welcher der Beaufschlagung eines Fahrzeugseitenfensters dient, und wobei die Schwenklamellen der Anströmung einer im Fahrzeuginnenraum befindlichen Person dienen.

Eine derartige Luftleitdüse ist aus der DE 42 07 670 C1 bekannt. Diese Düse weist eine in eine obere und untere Austrittszone aufgeteilte Luftaustrittsfläche auf. Über die obere Austrittszone ist ein erster Lamellensatz von parallel zueinander beabstandeten Festlamellen und über die untere Austrittszone ist ein zweiter Lamellensatz von parallel zueinander beabstandeten, um ihre Längsachse schwenkbaren Schwenklamellen angeordnet. Den Schwenklamellen ist ein Stellglied zum Einstellen eines frei wählbaren Schwenkwinkels zugeordnet. Die Fest- und Schwenklamellen sind dabei parallel zur Trennlinie der Austrittszonen angeordnet und liegen in einer gemeinsamen Ebene. In einer dazu parallelen Ebene sind weitere Schwenklamellen im Parallelabstand gleichmäßig über die obere und untere Austrittszone verteilt um ihre Längsachsen schwenkbar angeordnet, die sich quer zu den Fest- und Schwenklamellen erstrecken und mittels mindestens eines weiteren Stellgliedes in Form eines Schiebers in ihrer Schwenkstellung einstellbar sind.

Die aus der DE 42 07 670 C1 bekannte Luftleitdüse hat aufgrund ihrer beiden Austrittszonen, die zum einen der Seitenscheibenentfrostung und zum anderen der Innenraumbelüftung des Kraftfahrzeuges dienen, einen relativ großen Platzbedarf. Sie ist daher für Einbauorte mit geringem Platzangebot, wie beispielsweise im Bereich der B-Säule oberhalb der Türbrüstung eines Kraftfahrzeuges, kaum geeignet.

Der vorliegenden Erfindung liegt die Aufgabe zugrunde, eine Luftleitdüse der eingangs genannten Art bereitzustellen, welche bei zwei gleichzeitig realisierbaren Ausströmbereichen, von denen der eine der Beschlagbeseitigung bzw. Entfrostung eines Fahrzeugseitenfensters dient und der andere der verstellbar gerichteten Anströmung einer im Fahrzeuginnenraum befindlichen Person dient, einen relativ geringen Platzbedarf hat und insbesondere für einen Einbau im Bereich der B-Säule oberhalb der Türbrüstung eines Kraftfahrzeuges geeignet ist.

Diese Aufgabe wird bei einer Luftleitdüse der im Oberbegriff des Anspruchs 1 definierten Gattung erfindungsgemäß dadurch gelöst, daß die Schwenklamellen so bemessen und angeordnet sind, daß mehrere von ihnen bei einer maximalen Verschwenkung den Luftaustrittskanal in einem Bereich schließen, der der Anströmung einer im Fahrzeuginnenraum befindlichen Person dient, und daß bei dieser maximalen Verschwenkung mindestens eine der Schwenklamellen mit der mindestens einen Festlamelle so zusammenwirkt, daß der der Beaufschlagung des Fahrzeugseitenfensters dienende Ausströmbereich vergrößert ist.

Die erfindungsgemäße Luftleitdüse läßt sich trotz ihrer beiden unterschiedlichen Ausströmbereiche in kompakten Abmessungen realisieren, so daß sie insbesondere im Bereich der B-Säule oberhalb der Türbrüstung eines Kraftfahrzeuges eingebaut werden kann. Sie zeichnet sich zudem dadurch aus, daß durch Verschwenken ihrer am Luftaustritt angeordneten Schwenklamellen in deren Schließstellung der der Beaufschlagung des Seitenfensters dienende Ausströmbereich vergrößert und damit optimiert wird. Dies ist insbesondere im Winter bzw. bei niedriger Umgebungstemperatur zweckmäßig, wenn eine Beaufschlagung des Seitenfensters zur Entfrostung bzw. Beschlagbeseitigung oder Beschlagvermeidung erwünscht, eine Anströmung bzw. Kühlung von Fahrgästen aber dagegen meist nicht erwünscht ist. Andererseits können die am Luftaustritt angeordneten Schwenklamellen bei hoher Umgebungstemperatur, insbesondere im Sommer, in ihre Offenstellung verschwenkt werden, so daß eine gerichtete Anströmung zur Kühlung einer im Fahrzeuginnenraum befindlichen Person vorliegt. Durch die mindestens eine Festlamelle wird aber auch dann noch eine Anströmung des Seitenfensters sichergestellt, wobei der hierbei wirksame Ausströmbereich allerdings verkleinert ist.

Eine bevorzugte Ausgestaltung der erfindungsgemäßen Luftleitdüse besteht darin, daß die Schwenkachsen der Schwenklamellen mit Ausnahme der Schwenkachse der mindestens einen mit der mindestens einen Festlamelle zusammenwirkenden Schwenklamelle im wesentlichen in einer Ebene liegen. Hierdurch läßt sich im Bereich der B-Säule eines Kraftfahrzeuges eine optimale Unterteilung des entlang der B-Säule zugeführten Luftstroms in einen der Anströmung des Seitenfensters dienenden Anströmbereich und in einen der Personenanströmung dienenden Anströmbereich erzielen.

Eine andere bevorzugte Ausgestaltung der Erfindung besteht darin, daß in Luftströmungsrichtung gesehen vor den Schwenklamellen und der mindestens einen Festlamelle weitere Schwenklamellen im Parallelabstand zueinander angeordnet sind, die um jeweils eine Längsachse simultan verschwenkbar sind und deren Längsachsen quer zu den Längsachsen der in Strömungsrichtung nachfolgenden Lamellen verlaufen. Hierdurch läßt sich die Richtung der jeweiligen Anströmung und damit der Anströmbereich zusätzlich variieren. Dabei ist es insbesondere vorteilhaft, wenn die weiteren Schwenklamellen bogenförmig ausgebildet sind, wobei die Krümmung der Lamellen quer zu ihrer jeweiligen Längsachse verläuft. Durch die bogenförmige Ausbildung dieser Lamellen wird gegenüber ebenen Lamellen eine bessere Luftumlenkung erreicht, was insbesondere vorteilhaft ist, wenn die Luftleitdüse im Bereich der B-Säule oberhalb der Türbrüstung eines Kraftfahrzeuges eingebaut wird und die Luft aus einem längs der B-Säule verlaufenden Kanal in Richtung einer angrenzenden Seitenscheibe bzw. in Richtung der Fondpassagiere umzulenken ist.

Eine andere bevorzugte Ausgestaltung der erfindungsgemäßen Luftleitdüse besteht ferner darin, daß die weiteren Schwenklamellen mittels eines Einstellschiebers verschwenkbar sind, der auch der Einstellung der am Luftaustritt angeordneten Schwenklamellen dient, wobei der Einstellschieber auf der oder einer der Schwenklamellen verschiebbar gelagert ist, die mit der mindestens einen Festlamelle bezüglich der Beaufschlagung des Fahrzeugseitenfensters zusammenwirken.

Weitere bevorzugte und vorteilhafte Ausgestaltungen der erfindungsgemäßen Luftleitdüse sind in den Unteransprüchen angegeben.

Nachfolgend wird die Erfindung anhand einer ein Ausführungsbeispiel darstellenden Zeichnung näher erläutert. Es zeigen:
- Fig. 1: eine Vorderansicht auf eine erfindungsgemäße Luftleitdüse zum Einbau im Bereich der B-Säule oberhalb der Türbrüstung eines Kraftfahrzeuges, wobei sich die am Luftaustritt angeordneten Schwenklamellen der Düse in ihrer Schließstellung befinden,
- Fig. 2: eine perspektivische Darstellung weiterer Schwenklamellen, die in Luftströmungsrichtung gesehen vor den am Luftaustritt angeordneten Schwenklamellen angeordnet und simultan verschwenkbar sind, sowie einer Luftabsperrklappe mit zugehörigem Stellmechanismus,
- Fig. 3: eine Querschnittansicht entlang der Schnittlinie A-A gemäß Fig. 1, und
- Fig. 4: eine Querschnittansicht entlang der Schnittlinie A-A gemäß Fig. 1, wobei jedoch die am Luftaustritt angeordneten Schwenklamellen in eine Offenstellung geschwenkt sind.

Bei der in der Zeichnung dargestellten Luftleitdüse 1 handelt es sich um eine sogenannte Jalousiedüse. Sie weist einen einzigen Luftaustrittskanal 2 auf, an dessen Luftaustritt mehrere um jeweils eine Längsachse simultan verschwenkbare Schwenklamellen 3, 4, 5, 6 sowie eine Festlamelle 7 im Parallelabstand zueinander angeordnet sind. Die Schwenklamellen 3, 4, 5, 6 und die Festlamelle 7 weisen jeweils ein im wesentliches gerades Querschnittsprofil auf. Ihre Längsachsen sind im Einbauzustand der Luftleitdüse 1 im wesentlichen vertikal angeordnet. Die Festlamelle 7 definiert einen Ausströmbereich 8, welcher der Beschlagbeseitigung bzw. Entfrostung eines Fahrzeugseitenfensters dient. Die Schwenklamellen 3, 4, 5, 6 dienen dagegen der Anströmung bzw. Kühlung einer im Fahrzeuginnenraum befindlichen Person.

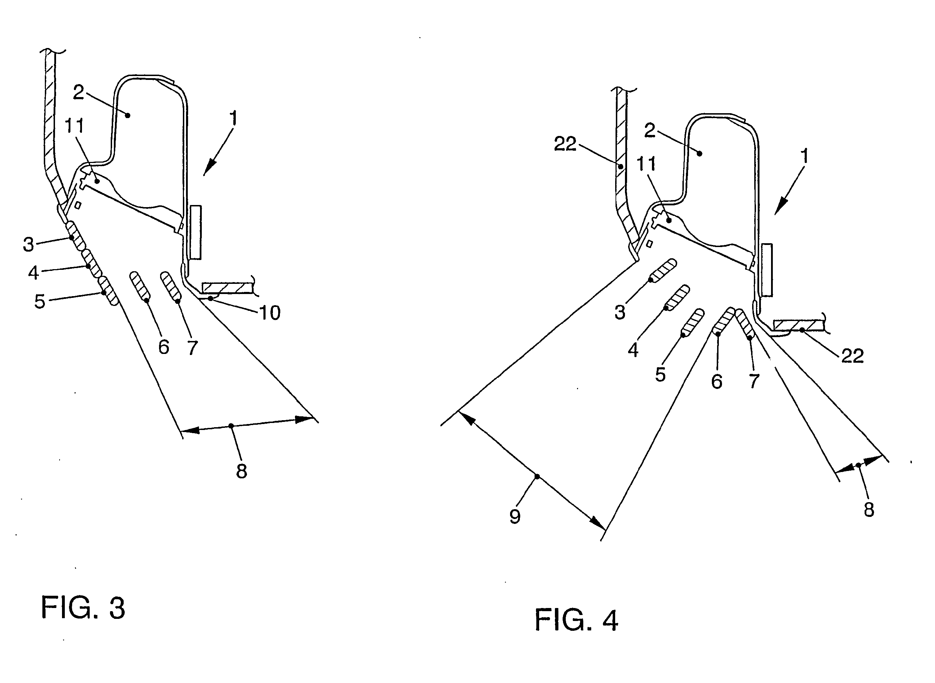

Anhand der Figuren 3 und 4 ist zu erkennen, daß die Schwenklamellen 3, 4, 5, 6 so bemessen und angeordnet sind, daß sie bei einer maximalen Verschwenkung den Luftaustrittskanal 2 in einem Bereich 9 schließen, der der Anströmung einer im Fahrzeuginnenraum befindlichen Person dient. In der Schließstellung sind die Schwenklamellen 3, 4, 5 im wesentlichen bündig angeordnet. Alternativ können die Schwenklamellen 3, 4, 5 auch so ausgebildet sein, daß sie sich in der Schließstellung an ihren Längsrändern etwas überdecken, wobei sich jeweils zwei Längsränder berühren. Die Schwenkachsen der Schwenklamellen 3, 4, 5 liegen im wesentlichen in einer Ebene. Die Schwenkachse der vierten Schwenklamelle 6 liegt dagegen zwischen dieser Ebene und der Ebene, in welcher die Festlamelle 7 angeordnet ist. Dementsprechend berühren sich die vierte Schwenklamelle und die benachbarte dritte Schwenklamelle 5 in keiner ihrer Schwenkstellungen.

Wenn der der Personenanströmung dienende Bereich 9 der Luftleitdüse 1 durch die maximale Verschwenkung der Schwenklamellen 3, 4, 5, 6 geschlossen ist, ist der Ausströmbereich 8, welcher der Beaufschlagung des Fahrzeugseitenfensters dient, vergrößert, wie ein Vergleich der Figuren 3 und 4 zeigt. Die von der Festlamelle 7 und dem flanschförmig ausgebildeten Frontrahmen 10 der Luftleitdüse 1 begrenzte Öffnung wird in der Stellung der Schwenklamellen gemäß Fig. 3 durch zwei Öffnungen ergänzt, die durch die Festlamelle 7 und die vierte Schwenklamelle 6 bzw. durch die vierte Schwenklamelle 6 und die dritte Schwenklamelle 5 begrenzt sind.

Werden die Schwenklamellen 3, 4, 5, 6 dagegen in die in Fig. 4 gezeigte Offenstellung verschwenkt, so wird der der Beaufschlagung des Fahrzeugseitenfensters dienende Ausströmbereich 8 auf die von der Festlamelle 7 und dem flanschförmig ausgebildeten Frontrahmen 10 der Luftleitdüse 1 begrenzte Öffnung reduziert. Die Schwenklamellen 3, 4, 5, 6 begrenzen dann vier Öffnungen, die gemeinsam den der Personenanströmung dienenden Ausströmbereich 9 bilden, wobei die vierte Schwenklamelle 6 mit ihrem hinteren Längsrand den hinteren Längsrand der Festlamelle 7 berührt. Mit 22 ist die Verkleidung der B-Säule bezeichnet.

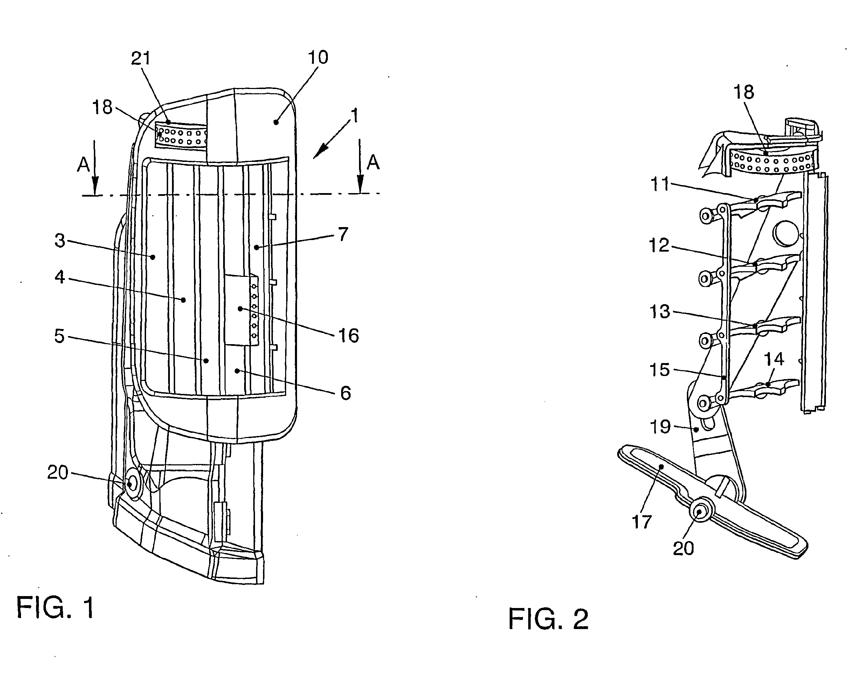

Wie in Fig. 2 gezeigt ist, sind in Luftströmungsrichtung gesehen vor den Schwenklamellen 3, 4, 5, 6 und der Festlamelle 7 weitere Schwenklamellen 11, 12, 13 14 im Parallelabstand zueinander angeordnet. Die Längs- bzw. Schwenkachsen der Schwenklamellen 11, 12, 13, 14 verlaufen quer zu den Längsachsen der Lamellen 3, 4, 5, 6, 7, von denen in Fig. 2 der Übersichtlichkeit halber nur eine Lamelle dargestellt ist. Die Schwenklamellen 11, 12, 13, 14 sind durch eine Gelenkstange 15 miteinander gekoppelt, so daß sie wie die Schwenklamellen 3, 4, 5, 6 ebenfalls simultan verschwenkbar sind. Es ist zu erkennen, daß die Schwenklamellen 11, 12, 13, 14 bogenförmig ausgebildet sind, wobei die Krümmung der Lamellen quer zu ihrer jeweiligen Längsachse verläuft. Die Schwenklamellen 11, 12, 13, 14 sind in der Luftleitdüse 1 so angeordnet, daß ihre konkave Seite dem Lufteintritt der Düse 1 zugewandt ist.

Zur Verschwenkung der am Luftaustritt angeordneten Schwenklamellen 3, 4, 5, 6 und der dazu quer angeordneten gekrümmten Schwenklamellen 11, 12, 13, 14 ist ein gemeinsames Stellglied in Form eines Einstellschiebers 16 vorgesehen, der auf der vierten Schwenklamelle 6 entlang deren Längsachse verschiebbar gelagert ist (vgl. Fig. 1). Dabei ist der Einstellschieber 16 mit den beiden Schwenklamellensätzen so gekoppelt, daß durch eine Längsverschiebung des Einstellschiebers 16 parallel zur Festlamelle 7 die gekrümmten Schwenklamellen 11, 12, 13, 14 um ihre Schwenkachsen jeweils um den gleichen Schwenkwinkel verstellt werden und durch eine dazu rechtwinklige, also im wesentlichen horizontale Querverschiebung des Einstellschiebers 16 die am Luftaustritt angeordneten Schwenklamellen 3, 4, 5, 6 um jeweils den gleichen Schwenkwinkel verstellt werden.

Die Luftleitdüse 1 ist ferner mit einer drehbaren Luftabsperrklappe 17 versehen, die in Luftströmungsrichtung gesehen vor den Schwenklamellen 11, 12, 13, 14 angeordnet ist und in ihrer Absperrstellung den zum Luftaustritt führenden Luftdurchtrittsquerschnitt verschließt. Zur Betätigung der Luftabsperrklappe 17 ist ein Einstellrad 18 vorgesehen, das über einen Gelenkmechanismus 19 auf die Luftabsperrklappe einwirkt. Mit 20 ist die Drehachse der Luftabsperrklappe 17 bezeichnet. Das Einstellrad 18 ragt mit einem Abschnitt durch eine Aussparung 21 des flanschartigen Frontrahmens 10 der Luftleitdüse 1. Das Einstellrad 18 und der Einstellschieber 16 weisen an ihren Betätigungsflächen jeweils Noppen auf. Die Noppen erleichtern die Bedienung und das Ertasten des Einstellrades 18 bzw. des Einstellschiebers 16 bei schlechten Lichtverhältnissen bzw. Dunkelheit.

Die Erfindung ist nicht auf das vorstehend beschriebene Ausführungsbeispiel beschränkt. Vielmehr ist ein Anzahl von Varianten denkbar, die auch bei abweichender Gestaltung vom Grundgedanken der Erfindung Gebrauch machen.

### BEZUGSZEICHENLISTE

- 1: Luftleitdüse
- 2: Luftaustrittskanal
- 3: Schwenklamelle
- 4: Schwenklamelle
- 5: Schwenklamelle
- 6: Schwenklamelle
- 7: Festlamelle
- 8: Ausströmbereich (Seitenfenster)
- 9: Ausströmbereich (Fondpassagiere)
- 10: Frontrahmen
- 11: Schwenklamelle
- 12: Schwenklamelle
- 13: Schwenklamelle
- 14: Schwenklamelle
- 15: Gelenkstange
- 16: Einstellschieber
- 17: Luftabsperrklappe
- 18: Einstellrad
- 19: Gelenkmechanismus
- 20: Drehachse der Luftabsperrklappe
- 21: Aussparung
- 22: Verkleidung

## Patentansprüche

1. Luftleitdüse zur Seitenscheibenentfrostung und Innenraumbelüftung eines Kraftfahrzeuges mit einem Luftaustrittskanal (2), an dessen Luftaustritt mindestens eine Festlamelle (7) und mehrere um jeweils eine Längsachse simultan verschwenkbare Schwenklamellen (3, 4, 5, 6) im Parallelabstand zueinander angeordnet sind, wobei durch die mindestens eine Festlamelle (7) ein Ausströmbereich (8) definiert ist, welcher der Beaufschlagung eines Fahrzeugseitenfensters dient, und wobei die Schwenklamellen (3, 4, 5, 6) der Anströmung einer im Fahrzeuginnenraum befindlichen Person dienen, **dadurch gekennzeichnet, daß** die Schwenklamellen (3, 4, 5, 6) so bemessen und angeordnet sind, daß mehrere von ihnen bei einer maximalen Verschwenkung den Luftaustrittskanal (2) in einem Bereich (9) schließen, der der Anströmung einer im Fahrzeuginnenraum befindlichen Person dient, und **daß** bei dieser maximalen Verschwenkung mindestens eine (6) der Schwenklamellen mit der mindestens einen Festlamelle (7) so zusammenwirkt, daß der der Beaufschlagung des Fahrzeugseitenfensters dienende Ausströmbereich (8) vergrößert ist.

2. Luftleitdüse nach Anspruch 1, **dadurch gekennzeichnet, daß** die Schwenkachsen der Schwenklamellen (3, 4, 5) mit Ausnahme der Schwenkachse der mindestens einen mit der mindestens einen Festlamelle (7) zusammenwirkenden Schwenklamelle (6) im wesentlichen in einer Ebene liegen.

3. Luftleitdüse nach Anspruch 1 oder 2, **dadurch gekennzeichnet, daß** in Luftströmungsrichtung gesehen vor den Schwenklamellen (3, 4, 5, 6) und der mindestens einen Festlamelle (7) weitere Schwenklamellen (11, 12, 13, 14) im Parallelabstand zueinander angeordnet sind, die um jeweils eine Längsachse simultan verschwenkbar sind und deren Längsachsen quer zu den Längsachsen der in Strömungsrichtung nachfolgenden Lamellen (3, 4, 5, 6, 7) verlaufen.

4. Luftleitdüse nach Anspruch 3, **dadurch gekennzeichnet, daß** die weiteren Schwenklamellen (11, 12, 13, 14) bogenförmig ausgebildet sind, wobei die Krümmung der Lamellen (11, 12, 13, 14) quer zu ihrer jeweiligen Längsachse verläuft.

5. Luftleitdüse nach einem der Ansprüche 1 bis 4, **dadurch gekennzeichnet, daß** die weiteren Schwenklamellen (11, 12, 13, 14) mittels eines Einstellschiebers (16) verschwenkbar sind, der auch der Einstellung der am Luftaustritt angeordneten Schwenklamellen (3, 4, 5, 6) dient, wobei der Einstellschieber (16) auf der oder einer der Schwenklamellen (6) verschiebbar gelagert ist, die mit der mindestens einen Festlamelle (7) bezüglich der Beaufschlagung des Fahrzeugseitenfensters zusammenwirken.

6. Luftleitdüse nach einem der Ansprüche 1 bis 5, **dadurch gekennzeichnet, daß** in Luftströmungsrichtung gesehen vor den weiteren Schwenklamellen eine dreh- oder schwenkbare Luftabsperrklappe (17) angeordnet ist, die in ihrer Absperrstellung den zum Luftaustritt führenden Luftdurchtrittsquerschnitt verschließt.

7. Luftleitdüse nach Anspruch 6, **dadurch gekennzeichnet, daß** die Luftabsperrklappe (17) mittels eines Einstellrades (18) betätigbar ist.

8. Luftleitdüse nach Anspruch 7, **dadurch gekennzeichnet, daß** an deren Vorderseite ein flanschartiger Frontrahmen (10) mit einer Aussparung (21) für das Einstellrad (18) ausgebildet ist.

9. Luftleitdüse nach den Ansprüchen 5 und 7, **dadurch gekennzeichnet, daß** der Einstellschieber (16) und/oder das Einstellrad (18) eine mit Noppen versehene Betätigungsfläche aufweisen.

10. Luftleitdüse nach einem der Ansprüche 1 bis 9, **dadurch gekennzeichnet, daß** sie zum Einbau in eine nahe dem Seitenfenster im Bereich der B-Säule des Kraftfahrzeuges vorgesehenen Öffnung derart ausgebildet ist, daß im Einbauzustand die am Luftaustritt angeordneten Schwenklamellen (3, 4, 5, 6, 7) im wesentlichen vertikal verlaufen.

## Claims

1. Air conduction vent for side window defrosting and interior ventilation of a motor vehicle with an air outlet channel (2), at the air outlet thereof at least one fixed slat (7) and a plurality of pivoting slats (3, 4, 5, 6), which may be simultaneously pivoted about one respective longitudinal axis, being arranged spaced apart from one another in parallel, an emission area (8) being defined by the at least one fixed slat (7) which serves for impinging on a vehicle side window and the pivoting slats (3, 4, 5, 6) serving for blowing air onto a person located in the interior of the vehicle, **characterized in that** the pivoting slats (3, 4, 5, 6) are dimensioned and arranged such that a plurality thereof when pivoted to a maximum extent, close the air outlet channel (2) in a region (9) which serves to blow air onto a person located in the interior of the vehicle, and **in that** with said pivoting to a maximum extent at least one (6) of the pivoting slats cooperates with the at least one fixed slat (7) such that the emission area (8) serving for impinging on the vehicle side window is enlarged.

2. Air conduction vent according to Claim 1, **characterized in that** the pivot axes of the pivoting slats (3, 4, 5), with the exception of the pivot axis of the at least one pivoting slat (6) cooperating with the at least one fixed slat (7), are located substantially in one plane.

3. Air conduction vent according to Claim 1 or 2, **characterized in that**, viewed in the direction of air flow, further pivoting slats (11, 12, 13, 14) are arranged spaced apart from one another in parallel, in front of the pivoting slats (3, 4, 5, 6) and the at least one fixed slat (7), and which may be simultaneously pivoted about one respective longitudinal axis and the longitudinal axes thereof extending transversely to the longitudinal axes of the slats (3, 4, 5, 6, 7) downstream in the direction of flow.

4. Air conduction vent according to Claim 3, **characterized in that** the further pivoting slats (11, 12, 13, 14), are of curved configuration, the curvature of the slats (11, 12, 13, 14) extending transversely to their respective longitudinal axis.

5. Air conduction vent according to one of Claims 1 to 4, **characterized in that** the further pivoting slats (11, 12, 13, 14) may be pivoted by means of an adjusting slide (16) which also serves to adjust the pivoting slats (3, 4, 5, 6) arranged on the air outlet, the adjusting slide (16) being displaceably arranged on the or on one of the pivoting slats (6) which cooperate with the at least one fixed slat (7) relative to the impingement of the vehicle side window.

6. Air conduction vent according to one of Claims 1 to 5, **characterized in that**, viewed in the direction of air flow, a rotatable or pivotable air shutoff flap (17) is arranged in front of the further pivoting slats which in its shutoff position closes the air passage cross section leading to the air outlet.

7. Air conduction vent according to Claim 6, **characterized in that** the air shutoff flap (17) may be actuated by means of an adjusting wheel (18).

8. Air conduction vent according to Claim 7, **characterized in that** at the front face thereof a flange-like front frame (10) is configured with a recess (21) for the adjusting wheel (18).

9. Air conduction vent according to Claims 5 and 7, **characterized in that** the adjusting slide (16) and/or the adjusting wheel (18) comprise an actuating surface provided with studs.

10. Air conduction vent according to one of Claims 1 to 9, **characterized in that** it is configured for installing in an opening provided in the vicinity of the side window in the region of the B-pillar of the motor vehicle, such that in the installed state the pivoting slats (3, 4, 5, 6, 7) arranged on the air outlet extend substantially vertically.

## Revendications

1. Buse de guidage d'air pour le dégivrage d'une fenêtre latérale et la ventilation de l'habitacle d'un véhicule automobile, avec un canal de sortie d'air (2) à la sortie d'air duquel sont disposées à distance parallèlement entre elles au moins une lamelle fixe (7) et plusieurs lamelles pivotantes (3, 4, 5, 6) pouvant pivoter simultanément autour d'axes longitudinaux respectifs, sachant que la lamelle fixe au moins unique (7) définit une région de flux sortant (8) qui sert à solliciter une fenêtre latérale du véhicule, et sachant que les lamelles pivotantes (3, 4, 5, 6) servent à diriger un flux d'air vers une personne se trouvant dans l'habitacle, **caractérisée en ce que** les lamelles pivotantes (3, 4, 5, 6) sont dimensionnées et disposées de telle sorte que plusieurs d'entre elles, lors d'un pivotement maximal, ferment le canal de sortie d'air (2) dans une région (9) qui sert à diriger un flux d'air vers une personne se trouvant dans l'habitacle, et que, lors de ce pivotement maximal, au moins une (6) des lamelles pivotantes coopère avec la lamelle fixe au moins unique (7) de telle sorte que la région de flux sortant (8) servant à solliciter la fenêtre latérale du véhicule est agrandie.

2. Buse de guidage d'air selon la revendication 1, **caractérisée en ce que** les axes de pivotement des lamelles pivotantes (3, 4, 5), à l'exception de l'axe de pivotement de la lamelle pivotante au moins unique (6) coopérant avec la lamelle fixe au moins unique (7), se trouvent essentiellement dans un même plan.

3. Buse de guidage d'air selon la revendication 1 ou 2, **caractérisée en ce que** des lamelles pivotantes supplémentaires (11, 12, 13, 14) sont disposées à distance parallèlement entre elles, considéré dans la direction d'écoulement de l'air, avant les lamelles pivotantes (3, 4, 5, 6) et la lamelle fixe au moins unique (7), qui peuvent pivoter simultanément autour d'axes longitudinaux respectifs et dont les axes longitudinaux s'étendent transversalement aux axes longitudinaux des lamelles (3, 4, 5, 6, 7) qui leur font suite dans la direction d'écoulement.

4. Buse de guidage d'air selon la revendication 3, **caractérisée en ce que** les lamelles pivotantes supplémentaires (11, 12, 13, 14) sont réalisées incurvées, la courbure des lamelles (11, 12, 13, 14) s'étendant transversalement à leur axe longitudinal respectif.

5. Buse de guidage d'air selon l'une quelconque des revendications 1 à 4, **caractérisée en ce que** les lamelles pivotantes supplémentaires (11, 12, 13, 14) sont pivotantes au moyen d'un curseur de réglage (16) qui sert également à régler les lamelles pivotantes (3, 4, 5, 6) disposées à la sortie d'air, le curseur de réglage (16) étant monté à coulissement sur la ou une des lamelles pivotantes (6) qui coopèrent avec la lamelle fixe au moins unique (7) pour la sollicitation de la fenêtre latérale du véhicule.

6. Buse de guidage d'air selon l'une quelconque des revendications 1 à 5, **caractérisée en ce qu'**un volet de coupure, d'air (17) pivotant ou rotatif est disposé avant les lamelles pivotantes supplémentaires, considéré dans la direction d'écoulement de l'air, qui ferme dans sa position de coupure la section de passage d'air menant à la sortie d'air.

7. Buse de guidage d'air selon la revendication 6, **caractérisée en ce que** le volet de coupure d'air (17) peut être actionné au moyen d'une molette de réglage (18).

8. Buse de guidage d'air selon la revendication 7, **caractérisée en ce que**, sur le côté avant de la buse, un cadre avant (10) du genre bride est pourvu d'un évidement (21) pour la molette de réglage (18).

9. Buse de guidage d'air selon les revendications 5 et 7, **caractérisée en ce que** le curseur de réglage (16) et/ou là molette de réglage (18) présentent une surface d'actionnement pourvue de picots.

10. Buse de guidage d'air selon l'une quelconque des revendications 1 à 9, **caractérisée en ce qu'**elle est conçue pour être installée dans une ouverture prévue à proximité de la fenêtre latérale dans la région du montant B du véhicule automobile de telle sorte que, dans l'état d'installation, les lamelles pivotantes (3, 4, 5, 6, 7) disposées à la sortie d'air s'étendent essentiellement verticalement.
